# EUROPÄISCHE PATENTSCHRIFT

(11) **EP 1 034 379 B1**
(45) Veröffentlichungstag und Bekanntmachung des Hinweises auf die Patenterteilung: **14.02.2001**
(21) Anmeldenummer: 98965166.6
(22) Anmeldetag: 19.11.1998
(51) Int. Cl.: F16B 5/02, F16B 25/10, E04D 3/36

(54) **SCHRAUBE ZUR ABSTANDSBEFESTIGUNG VON ABDECKPLATTEN ODER SCHIENEN AN EINEM UNTERBAU**
SCREW FOR FIXING THE DISTANCE OF COVERING PLATES OR RAILS IN A SUBSTRUCTURE
VIS POUR FIXATION AVEC ECARTEMENT DE PLAQUES DE RECOUVREMENT OU DE RAILS SUR UNE INFRASTRUCTURE

(30) Priorität: 16.12.1997 DE 19755953; 19.06.1998 DE 29811036 U
(43) Veröffentlichungstag der Anmeldung: 13.09.2000
(73) Patentinhaber: SFS Industrie Holding AG, 9435 Heerbrugg (CH)
(72) Erfinder: GASSER, Daniel, CH-9444 Diepoldsau (CH); THURNHERR, Ernst, CH-9444 Diepoldsau (CH); MONCHAUX, André, F-07130 Soyons (FR)
(74) Vertreter: Ludescher, Hans
(86) Internationale Anmeldenummer: EP9807431
(87) Internationale Veröffentlichungsnummer: WO9931395

(56) Entgegenhaltungen:
- WO-A-89/02504
- GB-A- 2 169 051
- US-A- 3 682 507
- US-A- 4 781 503

## Beschreibung

Die Erfindung betrifft eine Schraube zur Abstandsbefestigung von Abdeckplatten oder Schienen, gegebenenfalls unter Zwischenschaltung von Isoliermaterialien, an einem Unterbau, mit einem wenigstens teilweise mit einem Gewinde versehenen Schaft und einem mit einem Werkzeugangriff ausgestatteten Kopf, wobei wenigstens zwei Schaftabschnitte mit Gewindebereichen verschiedenen Durchmessers vorgesehen sind, und wobei die Unterseite des Kopfes der Schraube und ein Übergang zwischen zwei Schaftabschnitten Anschläge bilden.

Es sind bereits zur Abstandsbefestigung einzusetzende Schrauben bekannt geworden, welche mit zwei Gewindebereichen verschiedenen Durchmessers ausgestattet sind, wobei im fertig gesetzten Zustand beide Gewindebereiche im Eingriff mit dem Unterbau und den zu befestigenden Teilen sind. Solche Schrauben werden in der Regel bei einem relativ dicken Unterbau und dicken zu befestigenden Teilen, wie z.B. Holzlatten, eingesetzt, wobei im Unterbau eine entsprechende Einschraubtiefe oder die Möglichkeit zur Anbringung eines Dübels gegeben sein muß.

Bei einer bekannten Schraube zur Abstandsbefestigung eines Abdeckprofils wird eine Schraube eingesetzt (GB 2 169 051 A), welche zwei Schaftabschnitte mit Gewindebereichen verschiedenen Durchmessers aufweist, wobei ein als Anschlag wirkender Übergang zwischen den zwei Schaftabschnitten vorgesehen ist, welcher auf dem Unterbau als Abstandhalter zur Anlage kommt. Das Gewinde an dem Schaftabschnitt mit kleinerem Durchmesser ist bis unmittelbar zu diesem Anschlag hin geführt, greift also bei Aufsetzen dieses Anschlages voll in den Unterbau ein, so daß die Gefahr eines Überdrehens der Schraube oder der Zerstörung des Gewindes auf dem Schaftabschnitt mit kleinerem Durchmesser gegeben ist. Eine solche Schraube kann mit einem Setzgerät funktionieren, welches unmittelbar infolge eines sich rasch erhöhenden Drehmomentes abgeschaltet werden kann. Um ein entsprechendes Drehmoment zu erreichen, bedarf es aber auch einer entsprechenden Dicke des Unterbaues, in welchen die Schraube eingedreht werden soll.

Für den Einsatz bei einem Unterbau aus dünnem Material oder bei einem zu befestigenden Teil geringer Dicke sind solche Schrauben nicht geeignet.

Die vorliegende Erfindung hat sich daher zur Aufgabe gestellt, eine Schraube der eingangs genannten Art zu schaffen, die in besonderer Weise zur Abstandsbefestigung dünnwandiger Teile an einem dünnwandigen Unterbau eingesetzt werden kann.

Erfindungsgemäß wird dazu vorgeschlagen, daß sowohl an die Unterseite des Kopfes als auch an den Übergang zwischen zwei Schaftabschnitten mit Gewindebereichen verschiedenen Durchmessers an dem jeweiligen Schaftabschnitt ein gewindefreier Bereich anschließt, wobei die axiale Länge dieser gewindefreien Bereiche einerseits auf die Dicke der zu befestigenden Abdeckplatten oder Schienen und gegebenenfalls eingesetzter Unterleg- und/oder Dichtscheiben und andererseits auf die Dicke des Unterbaues abgestimmt ist.

Mit diesen erfindungsgemäßen Maßnahmen ist auch bei dünnwandigen Elementen eine echte Abstandsbefestigung möglich, da im fertig gesetzten Zustand einer solchen Schraube sowohl die Abdeckplatten oder Schienen als auch das Material des Unterbaues in den gewindefreien Bereich eingreifen und dort in axialer Richtung gesichert gehalten werden. Von Vorteil ist dabei, daß die Schraube in diesem Setzzustand in Eindrehrichtung weiter verdreht werden kann, ohne daß sich diese weiter in den Untergrund einschraubt. Sobald die Schraube die zu befestigenden Abdeckplatten oder Schienen und den Unterbau durchdrungen hat, ist keiner der Gewindebereiche mehr im Eingriff mit dem zu befestigenden Teil bzw. dem Unterbau.

Somit ist nicht nur eine einwandfreie Abstandsbefestigung möglich, sondern auch die Gewähr einer entsprechenden Sicherheit gegen ein Lösen der Schraube gegeben. Wenn unter dem Kopf der Schraube zusätzlich noch eine Unterleg- und/oder Dichtscheibe eingesetzt ist, sorgt diese nach dem Einschraubvorgang für einen axialen Druck, so daß die zu befestigenden Abdeckplatten oder Schienen und die Unterleg- und/oder Dichtscheibe mit einer entsprechenden axialen Vorspannung im gewindefreien Bereich unterhalb des Kopfes der Schraube gehalten sind.

Die beschriebene Schraube eignet sich in besonderer Weise für die Abstandsbefestigung von Abdeckplatten oder Schienen an einem Unterbau, selbst auch dann, wenn noch weiche Isoliermaterialien dazwischengeschaltet sind. Zur Erzielung einer ordnungsgemäßen Befestigung wurde bisher bei einem solchen speziellen Einsatzfall versucht, zwischen dem Unterbau und den zu befestigenden Abdeckplatten oder Schienen einen relativ festen oder gegebenenfalls überhaupt nicht komprimierbaren Teil einzusetzen, um den notwendigen Abstand zu gewährleisten.

Bei der gegenseitigen Befestigung von zwei dünnen Blechen ist es bereits bekannt, diese so miteinander zu verbinden, daß sie in den gewindefreien Bereich zwischen einem Gewindebereich und dem Kopf einer Schraube, gegebenenfalls zusammen mit einer Unterlegscheibe, eingreifen. Die Schraube kann dadurch beim Setzvorgang entsprechend überdreht werden, da der Gewindebereich in der endgültigen Stellung der gesetzten Schraube nicht mehr im Eingriff ist. Obwohl eine solche Schraube für die gegenseitige Befestigung direkt aneinander liegender dünner Bleche eingesetzt wird, sind keine Hinweise auf die Schraube gemäß der vorliegenden Erfindung gegeben.

Die Abstandsbefestigung von dünnwandigen Elementen ohne dazwischenliegende feste Teile wird erst mit einer konstruktiven Ausführung gemäß der vorliegenden Erfindung möglich.

Eine vorteilhafte konstruktive Gestaltung liegt darin, daß die dem Kopf der Schraube bzw. dem Übergang zwischen zwei Schaftabschnitten mit Gewindebereichen verschiedenen Durchmessers zugewandten Enden der Gewindebereiche einen auf die Entfernung der Abdeckplatten oder Schienen vom Unterbau angepaßten axialen Abstand voneinander haben. Dadurch wird die Möglichkeit geschaffen, daß die zu befestigenden Abdeckplatten oder Schienen immer mit demselben Abstand von dem Unterbau liegen, selbst dann, wenn die Abdeckplatten durch die Bearbeitung bzw. das Setzen der Schraube gegenüber dem Unterbau verschoben wurden. Dank des Eingriffes des Gewindebereiches in die Abdeckplatten oder Schienen und in den Unterbau wird die Schraube nach dem endgültigen Setzen gegenüber der Abdeckplatte oder Schiene und dem Unterbau immer eine gleiche Lage einnehmen, so daß die Teile stets in exakt gleichem Abstand zueinander fixiert werden können.

Zur Verbesserung dieser Wirkung und zur Verhinderung einer axialen Relativbewegung zwischen der Abdeckplatte oder Schiene und dem Unterbau beim Setzvorgang, wird vorgeschlagen, daß alle Gewindebereiche die gleiche Gewindesteigung aufweisen.

Um gegebenenfalls ein schnelleres Setzen der Schraube zu bewirken oder aber zur Erzielung einer besseren Abstützung am jeweiligen Ende des Gewindebereiches ist es vorteilhaft, wenn die Gewindebereiche als zwei- oder mehrgängiges Gewinde ausgeführt sind.

Ob die zu befestigenden Abdeckplatten oder Schienen und/oder der Unterbau vorgebohrt sind oder nicht, ist für die entsprechende Aufweitung der Bohrungen in diesen Teilen ohne Bedeutung, denn die Bohrungen in den entsprechenden Elementen werden auf jeden Fall auf den Kerndurchmesser des jeweils zugeordneten Gewindebereiches aufgeweitet. Daher ist eine sichere Halterung bei einer solchen Abstandsbefestigung gewährleistet, wenn der Durchmesser der gewindefreien Bereiche zumindest annähernd dem Kerndurchmesser des jeweils zugeordneten Gewindebereiches entspricht.

Bei einer besonderen Ausgestaltung der Schraube wird vorgeschlagen, daß der Übergang von einem an dem in Richtung zum Kopf der Schraube nächstfolgenden Schaftabschnitt angeordneten Anschlagbund gebildet ist. Dadurch ist eine noch bessere Abstützung der Schraube im Bereich des hier vorgesehenen gewindefreien Bereiches möglich.

Aus Fertigungsgründen ist es zweckmäßig, wenn der Anschlagbund von dem folgenden Schaftabschnitt durch einen nutartigen Einschnitt getrennt ist. Dies bringt einerseits wesentlich bessere Gestaltungsmöglichkeiten für den Anschlagbund mit sich, andererseits wird die Herstellung in einem Walzverfahren ermöglicht.

In diesem Zusammenhang sieht eine spezielle Ausgestaltung vor, daß der Durchmesser des Anschlagbundes größer ist als der Außendurchmesser des in Richtung zum freien Ende der Schraube folgenden Gewindebereiches. Dadurch ist auch nach der Durchdringung eines Unterbaues, einer Schiene oder eines Steges an dem dem Gewindeende gegenüberliegenden Übergang eine relativ großflächige Abstützung möglich.

Zusätzlich ist es in einem solchen Falle vorteilhaft, wenn der Durchmesser des Anschlagbundes größer ist als der Durchmesser des in Richtung zum Kopf der Schraube folgenden Schaftabschnittes. Bei einer solchen Ausführung können nicht nur eine wesentliche Materialeinsparung bei der Herstellung der Schraube erzielt und der dem Kopf der Schraube zugewandte Gewindebereich im Durchmesser kleiner gehalten werden, sondern auch das Eindrehmoment beim Setzen der Schraube wird dadurch noch verringert.

Eine weitere vorteilhafte Ausgestaltung der Schraube sieht vor, daß der Durchmesser des Grundes des nutartigen Einschnittes kleiner ist als der Durchmesser des in Richtung zum Kopf der Schraube folgenden Schaftabschnittes. Damit wird ein echter Einschnitt geschaffen, der wesentlich dazu beiträgt, die besondere Ausführung und den Durchmesser des Anschlagbundes nach Bedarf zu gestalten.

Eine andere Ausführungsmöglichkeit sieht vor, daß der Durchmesser des Grundes des nutartigen Einschnittes annähernd dem Kerndurchmesser des in Richtung zum freien Ende der Schraube folgenden Gewindeabschnittes entspricht. Dies bringt wiederum Vorteile bei der Fertigung der Schraube in einem Walzverfahren mit sich.

Eine besondere konstruktive Gestaltung sieht vor, daß der unmittelbar an den Kopf der Schraube anschließende gewindefreie Bereich zwei Abschnitte unterschiedlichen Durchmessers aufweist, wobei der kopfnahe Abschnitt einen größeren, auf eine Unterleg- und/oder Dichtscheibe angepaßten Durchmesser hat und der folgende Abschnitt im wesentlichen dem Kerndurchmesser des folgenden Gewindebereiches angepaßt ist. Damit ist einerseits eine gut passende und somit für die Dichtwirkung optimale Halterung einer Unterleg- und/oder Dichtscheibe gegeben, andererseits muß das in den zu befestigenden Abdeckplatten oder Schienen vorzusehende Loch nicht zu groß gebohrt werden, um eine ausreichende Abstützung am entsprechenden Ende des Gewindebereiches zu erhalten.

Die Löcher in der Abdeckplatte oder Schiene sind wohl auf jeden Fall vorzubohren. Es ist auch möglich, im Unterbau eine entsprechende Bohrung vorzubereiten, wobei dann eine Schraube mit den entsprechenden Schaftabschnitten mit Gewindebereichen verschiedenen Durchmessers eingedreht werden kann. Eine vorteilhafte Ausgestaltung sieht jedoch vor, daß am freien Ende des Schaftes ein Bohrteil angeordnet oder ausgebildet ist. In einem solchen Falle bedarf es dann lediglich eines Vorbohrens an den Abdeckplatten oder Schienen, die im Abstand vom Unterbau zu befestigen sind.

Speziell bei der Ausgestaltung mit einem Bohrteil ist es von Vorteil, den Bohrvorgang nicht durch einen großen Vorschub entsprechend der Gewindesteigung zu stören. Daher ist es zweckmäßig, wenn irgendein Gewindebereich erst dann in das volle Material eingreift, wenn der Bohrvorgang beendet ist. In diesem Zusammenhang ist eine vorteilhafte Konstruktion darin zu sehen, daß die Länge der Gewindebereiche auf den einzelnen Schaftabschnitten jeweils gleich groß ist. Nachdem der Abstützbereich der einen Enden der Gewindebereiche auf den Abstand der zu befestigenden Abdeckplatten oder Schienen vom Unterbau abgestimmt ist, wird durch diese zusätzliche Maßnahme gewährleistet, daß stets beide oder mehrere Gewindebereiche gleichzeitig miteinander eingreifen können, so daß der Bohrvorgang auf jeden Fall immer beendet ist.

Weitere erfindungsgemäße Merkmale und besondere Vorteile werden in der nachstehenden Beschreibung anhand der Zeichnung noch näher erläutert: Es zeigen:
Fig. 1 eine Ansicht einer Schraube;
Fig. 2 ein Einsatzbeispiel für eine solche Schraube in gesetztem Zustand;
Fig. 3 eine gegenüber Fig. 1 in konstruktiver Hinsicht nur unwesentlich veränderte Schraube.
Fig. 4 eine Ausführungsvariante der Schraube;
Fig. 5 eine Darstellung analog der Fig. 2, jedoch unter Einsatz einer Schraube gemäß Fig. 4.

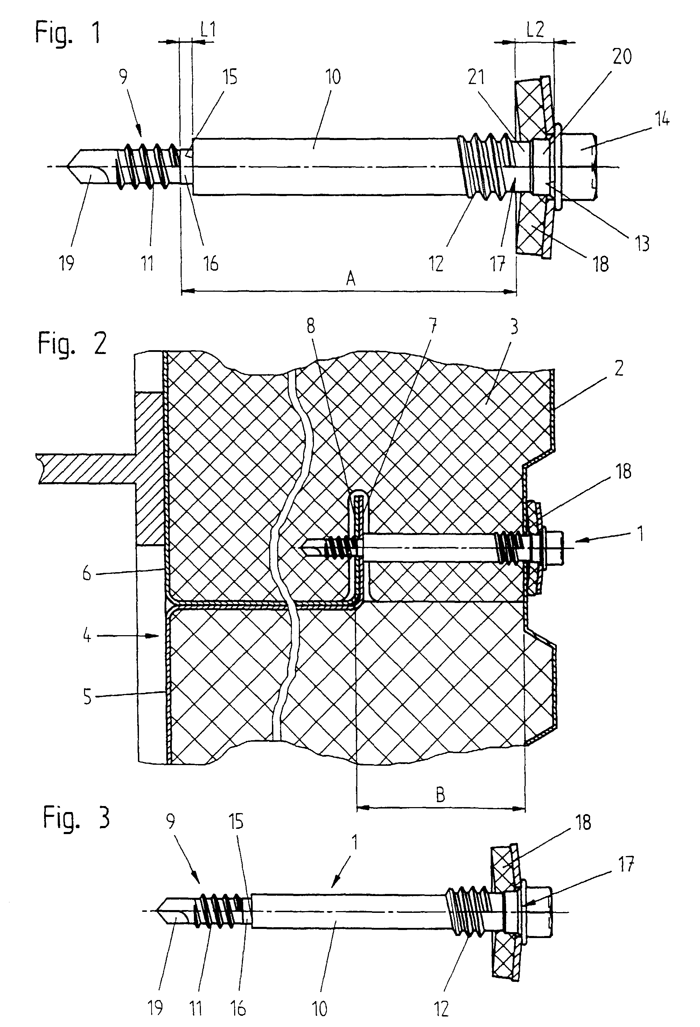

Die Schraube 1 dient zur Abstandsbefestigung von Abdeckplatten 2 unter Zwischenschaltung von Isoliermaterialien 3 an einem Unterbau 4. Die zu befestigenden Abdeckplatten 2 und der Unterbau 4 sind aus relativ dünnwandigem Material gebildet. Der Unterbau 4 ist beim Beispiel nach Fig. 2 aus Profilblechen 5 und 6 gebildet, welche einen Steg 7 aufweisen. Die Isoliermaterialien 3 sind an wenigstens einer Stirnseite mit einem entsprechenden Schlitz 8 versehen und können dadurch zumindest vorerst lagegesichert, z.B. an einer Fassade, montiert werden. Die dann anzubringenden Abdeckplatten 2 sind mit einem entsprechenden Profil versehen und bilden die Außenwandung des Gebäudes oder dergleichen. Da die Isoliermaterialien 3 weich sind und keinesfalls auf Druck belastet werden können, bedarf es einer besonderen Abstandsbefestigung der Abdeckplatten 2 gegenüber dem Unterbau 4 bzw. im konkreten Fall gegenüber dem Steg 7, welcher aus den beiden Profilblechen 5 und 6 gebildet ist. Die Schraube 1, die sich für diese Abstandsbefestigung besonders eignet, weist zwei Schaftabschnitte 9 und 10 auf, welche mit Gewindebereichen 1 und 12 mit verschiedenen Durchmessern ausgestattet sind. Die Unterseite 13 des Kopfes 14 der Schraube 1 und der Übergang 15 zwischen den beiden Schaftabschnitten 9 und 10 bilden Anschläge. Sowohl an die Unterseite 13 des Kopfes 14 als auch an den Übergang 15 schließen gewindefreie Bereiche 16 und 17 an. Die axiale Länge L1 bzw. L2 dieser gewindefreien Bereiche 16 bzw. 17 ist einerseits auf die Dicke des Steges 7 und andererseits auf die Dicke der zu befestigenden Abdeckplatten 2 und der zusätzlich eingesetzten Unterleg- und Dichtscheiben 18 abgestimmt. Sobald die Schraube 1 ganz eingedreht ist, greift der Steg 7 zur Gänze in den gewindefreien Bereich 16 ein und die Abdeckplatte 2 und die Unterleg- und Dichtscheibe 18 werden zwischen der Unterseite 13 am Kopf 14 und dem Ende des Gewindebereiches 12 im gewindefreien Bereich 17 eingespannt.

Die dem Kopf 14 der Schraube 1 bzw. dem Übergang 15 zugewandten Enden der Gewindebereiche weisen einen Abstand A voneinander auf, der dem Abstand B zwischen den Abdeckplatten 2 bzw. den entsprechenden Schienen und dem Unterbau 4 bzw. dem Steg 7 entspricht.

Die Gewindebereiche 11 und 12 haben zur Verhinderung von Verschiebungen der beiden auf Abstand miteinander zu befestigenden Elemente beim Eindrehen der Schraube vorteilhaft die gleiche Gewindesteigung. Von Vorteil kann auch eine zwei- oder mehrgängige Ausführung des Gewindes der Gewindebereiche 11 und 12 sein. Auch ist es denkbar, mehr als zwei Schaftabschnitte 9 und 10 und somit ebenfalls mehr als zwei Gewindebereiche 11 und 12 vorzusehen. Dannzumal ist es auch möglich, mehr als zwei Elemente in entsprechendem Abstand voneinander zu befestigen. Diese Möglichkeit besteht dank der besonderen konstruktiven Gestaltung der Schraube, denn alle in entsprechendem Abstand voneinander zu befestigenden Elemente werden schlußendlich in einem gewindefreien Bereich gehalten bzw. eingespannt oder zumindest lose, jedoch gegen zu weites axiales Verschieben gesichert gehalten. Die Schraube kann also nach dem fertigen Setzen immer in entsprechendem Maße weitergedreht werden, so daß ein Setzvorgang sehr einfach durchgeführt werden kann. Gearbeitet werden kann allein mit einem Tiefenanschlag, wobei es unwesentlich ist, ob die Schraube noch ein oder zwei Umdrehungen weitergedreht wird oder nicht. Das Gewinde ist mit Beendigung des Setzvorganges nicht mehr im Eingriff mit der zu befestigenden Abdeckplatte oder der Schiene und dem Steg 7 des Unterbaues 4.

Es wäre durchaus möglich, den Gewindebereich 12 über die ganze Länge des Schaftabschnittes 10 zu führen. Diesfalls würde der Übergang 15 praktisch vom entsprechenden Ende des Gewindebereiches 12 gebildet. Daß die Durchmesserbereiche der Schaftabschnitte 9 und 10 nicht sehr wesentlich voneinander differieren müssen, ist aus Fig. 3 ersichtlich. Es muß lediglich zwischen den beiden Schaftabschnitten 9 und 10 ein entsprechender Übergang 15 vorhanden sein, der einen Anschlag auf der einen Seite des gewindefreien Bereiches 16 bildet. Auch bei der Anordnung nach Fig. 3 wäre es möglich, den Gewindebereich 12 über die ganze Länge des Schaftabschnittes 10 zu führen. Ein solcher verlängerter Gewindebereich 12 ist aber nur dann sinnvoll, wenn sowohl die Bohrungen in den Abdeckplatten 2 als auch im Steg 7 vorgefertigt sind, d.h. die Schraube 1 keinen Bohrteil 19 aufweist.

Eine vorteilhafte Ausgestaltung der Schraube 1 sieht jedoch vor, am freien Ende derselben einen Bohrteil 19 anzuordnen oder auszubilden. Ob es sich dabei um einen vollen Bohrteil oder aber um ein beispielsweise in einen Schlitz am freien Ende der Schraube eingesetztes Bohrplättchen handelt, ist nicht von Bedeutung. Dabei wäre es durchaus denkbar, an dem Bohrteil 19 oder im Bereich des Schaftabschnittes 10 gegebenenfalls zusätzlich abbrechbare Bohrflügel vorzusehen, um die Möglichkeit zu schaffen, im Steg 7 ein kleineres Loch und in der zu befestigenden Abdeckplatte 2 ein geringfügig größeres Loch herstellen zu können. Wenn mit einem Bohrteil 19 gearbeitet wird, dann ist es auf jeden Fall zweckmäßig, wenn die axiale Länge der Gewindebereiche 11 und 12 auf den einzelnen Schaftabschnitten 9, 10 gleich groß ist. Dadurch wird verhindert, daß einer der Gewindebereiche 1 oder 12 während des Bohrvorganges im Eingriff ist, wodurch der Bohrvorgang infolge des großen Vorschubes gestört würde.

Eine besondere Ausbildung kann noch für den gewindefreien Bereich 17 unterhalb des Kopfes 14 der Schraube vorgesehen werden. Wie in der Zeichnung dargestellt, sind unmittelbar an den Kopf 14 der Schraube 1 anschließend ein Abschnitt 20 mit einem größeren Durchmesser und ein Abschnitt 21 mit kleinerem Durchmesser vorhanden. Der kopfnahe Abschnitt 20 mit dem größeren Durchmesser ist dem Durchmesser einer Unterleg- und/oder Dichtscheibe 18 angepaßt. Der folgende Abschnitt 21 entspricht im Durchmesser im wesentlichen dem Kerndurchmesser des folgenden Gewindebereiches 12.

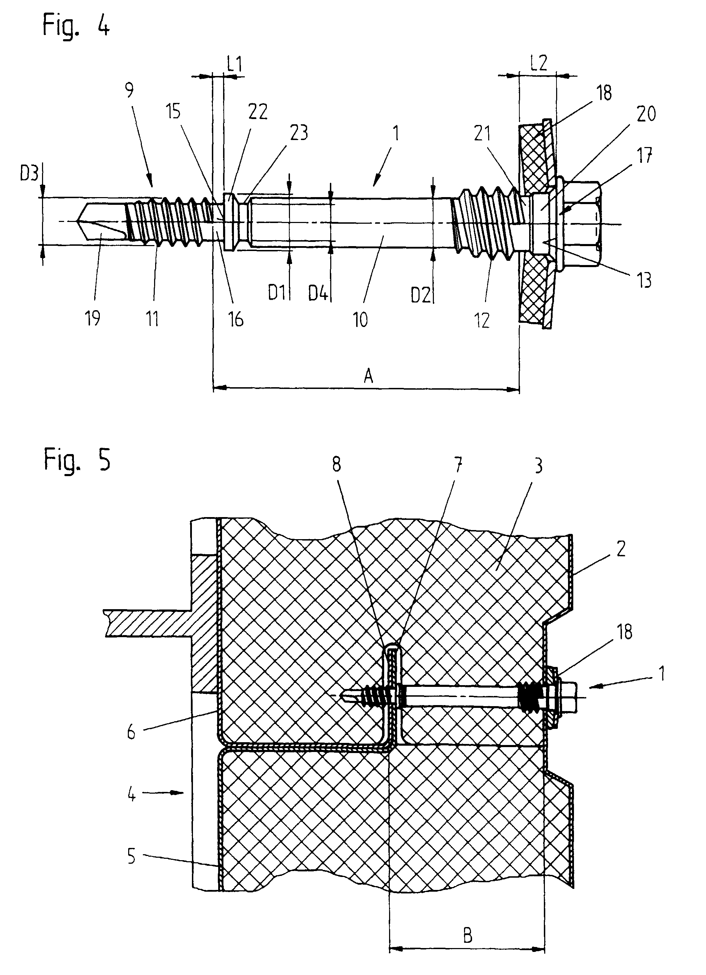

Die Ausführung gemäß den Fig. 4 und 5 zeigt eine besondere Schraube 1 zur Abstandsbefestigung von Abdeckplatten 2 oder Schienen an einem Unterbau 4. Der Aufbau des Einsatzbeispieles entspricht demjenigen in Fig. 2. Zudem sind viele konstruktive Maßnahmen der Schraube 1 selbst zumindest ähnlich der Ausgestaltung nach den Fig. 1 und 3. Aus diesem Grunde werden nachstehend lediglich noch die gegenüber den Ausgestaltungen nach den Fig. 1 und 3 abweichenden Merkmale näher erläutert.

Bei der Schraube 1 wird der Übergang 15 von einem an dem in Richtung zum Kopf 14 der Schraube 1 nächstfolgenden Schaftabschnitt 10 angeordneten Anschlagbund 22 gebildet. Dieser Anschlagbund kann etwas über den Schaftabschnitt vorstehen. Bei der gezeigten Konstruktion ist vorgesehen, den Anschlagbund 22 durch einen nutartigen Einschnitt 23 von dem folgenden Schaftabschnitt 10 zu trennen.

Der Durchmesser D1 des Anschlagbundes 22 ist beim dargestellten Beispiel größer als der Außendurchmesser des in Richtung zum freien Ende der Schraube 1 folgenden Gewindebereiches 11. Zudem ist der Durchmesser des Anschlagbundes 22 größer als der Durchmesser D2 des in Richtung zum Kopf 14 der Schraube 1 folgenden Schaftabschnittes 10. Schließlich ist der Durchmesser D4 des Grundes des nutartigen Einschnittes 23 kleiner als der Durchmesser D2 des in Richtung zum Kopf der Schraube folgenden Schaftabschnittes 10. Weiter kann vorgesehen werden, daß der Durchmesser D4 des Grundes des nutartigen Einschnittes 23 annähernd dem Kerndurchmesser des in Richtung zum freien Ende der Schraube folgenden Gewindeabschnittes 11 entspricht. Diese Maßangaben tragen nicht nur vorteilhaft zu einer optimalen Fertigung einer solchen Schraube 1 bei, sondern auch zur bestmöglichen Wirkung bei einem bestimmungsgemäßen Einsatz.

Mittels der beschriebenen Schraube wird eine optimale Möglichkeit zur Abstandsbefestigung von Abdeckplatten oder Schienen gegenüber einem Unterbau geschaffen, wobei sowohl die zu befestigenden Elemente als auch der Unterbau selbst relativ dünnwandig ausgebildet sein können. Gerade dann, wenn zwischen den auf Abstand zu befestigenden Elementen keine stützenden oder kraftaufnehmenden Elemente vorhanden sind, also beispielsweise weiches Isoliermaterial dazwischengeschaltet ist, kann eine feste Verbindung mit exaktem Abstand erzielt werden. Trotzdem können jedoch entsprechende Belastungen, z.B. Sogkräfte bei einer Windbelastung, aufgenommen werden.

Eingesetzt werden kann die erfindungsgemäße Schraube aber nicht nur im Fassadenbau bei der Befestigung von Abdeckplatten unter Zwischenschaltung von Isoliermaterialien, sondern überall dort, wo in irgendeiner Weise Abdeckplatten, Schienen oder andere Elemente mit Abstand gegenüber einem Unterbau, der ebenfalls relativ dünnwandig ausgebildet ist, befestigt werden sollen.

## Patentansprüche

1. Schraube (1) zur Abstandsbefestigung von Abdeckplatten (2) oder Schienen, gegebenenfalls unter Zwischenschaltung von Isoliermaterialien (3), an einem Unterbau (4), mit einem wenigstens teilweise mit einem Gewinde (11, 12) versehenen Schaft (9,10) und einem mit einem Werkzeugangriff ausgestatteten Kopf (14), wobei wenigstens zwei Schaftabschnitte (9, 10) mit Gewindebereichen (11, 12) verschiedenen Durchmessers vorgesehen sind, und wobei die Unterseite (13) des Kopfes (14) der Schraube (1) und ein Übergang (15) zwischen zwei Schaftabschnitten (9, 10) Anschläge bilden, **dadurch gekennzeichnet**, daß sowohl an die Unterseite (13) des Kopfes (14) als auch an den Übergang (15) zwischen zwei Schaftabschnitten (9, 10) mit Gewindebereichen (11, 12) verschiedenen Durchmessers an dem jeweiligen Schaftabschnitt (9, 10) ein gewindefreier Bereich (16, 17) anschließt, wobei die axiale Länge (L1, L2) dieser gewindefreien Bereiche (16, 17) einerseits auf die Dicke der zu befestigenden Abdeckplatten (2) oder Schienen und gegebenenfalls eingesetzter Unterleg- und/oder Dichtscheiben (18) und andererseits auf die Dicke des Unterbaues (4) abgestimmt ist.

2. Schraube nach Anspruch 1, dadurch gekennzeichnet, daß die dem Kopf (14) der Schraube (1) bzw. dem Übergang (15) zwischen zwei Schaftabschnitten (9, 10) mit Gewindebereichen (11, 12) verschiedenen Durchmessers zugewandten Enden der Gewindebereiche (11, 12) einen auf die Entfernung (B) der Abdeckplatten (2) oder Schienen vom Unterbau (4, 7) angepaßten axialen Abstand (A) voneinander haben.

3. Schraube nach Anspruch 1 oder 2, dadurch gekennzeichnet, daß alle Gewindebereiche (11, 12) die gleiche Gewindesteigung aufweisen.

4. Schraube nach einem der Ansprüche 1 bis 3, dadurch gekennzeichnet, daß die Gewindebereiche (11, 12) als zwei- oder mehrgängiges Gewinde ausgeführt sind.

5. Schraube nach einem der Ansprüche 1 bis 4, dadurch gekennzeichnet, daß der Durchmesser der gewindefreien Bereiche (16, 17) zumindest annähernd dem Kerndurchmesser des jeweils zugeordneten Gewindebereiches (11, 12) entspricht.

6. Schraube nach einem der Ansprüche 1 bis 5, dadurch gekennzeichnet, daß der Übergang (15) von einem an dem in Richtung zum Kopf (14) der Schraube nächstfolgenden Schaftabschnitt (10) angeordneten Anschlagbund (22) gebildet ist.

7. Schraube nach Anspruch 6, dadurch gekennzeichnet, daß der Anschlagbund (22) von dem folgenden Schaftabschnitt (10) durch einen nutartigen Einschnitt (23) getrennt ist.

8. Schraube nach den Ansprüchen 6 und 7, dadurch gekennzeichnet, daß der Durchmesser (D1) des Anschlagbundes (22) größer ist als der Außendurchmesser (D3) des in Richtung zum freien Ende der Schraube folgenden Gewindebereiches (11).

9. Schraube nach einem der Ansprüche 6 bis 8, dadurch gekennzeichnet, daß der Durchmesser (D1) des Anschlagbundes (22) größer ist als der Durchmesser (D2) des in Richtung zum Kopf (14) der Schraube folgenden Schaftabschnittes (10).

10. Schraube nach einem der Ansprüche 6 bis 9, dadurch gekennzeichnet, daß der Durchmesser (D4) des Grundes des nutartigen Einschnittes (23) kleiner ist als der Durchmesser (D2) des in Richtung zum Kopf der Schraube folgenden Schaftabschnittes (10).

11. Schraube nach einem der Ansprüche 6 bis 9, dadurch gekennzeichnet, daß der Durchmesser (D4) des Grundes des nutartigen Einschnittes (23) annähernd dem Kerndurchmesser des in Richtung zum freien Ende der Schraube folgenden Gewindeabschnittes (11) entspricht.

12. Schraube nach einem der Ansprüche 1 bis 11, dadurch gekennzeichnet, daß der unmittelbar an den Kopf (14) der Schraube (1) anschließende gewindefreie Bereich (17) zwei Abschnitte (20, 21) unterschiedlichen Durchmessers aufweist, wobei der kopfnahe Abschnitt (20) einen größeren, auf eine Unterleg- und/oder Dichtscheibe (18) angepaßten Durchmesser hat und der folgende Abschnitt (21) im wesentlichen dem Kerndurchmesser des folgenden Gewindebereiches (12) angepaßt ist.

13. Schraube nach einem der Ansprüche 1 bis 12, dadurch gekennzeichnet, daß am freien Ende des Schaftes ein Bohrteil (19) angeordnet oder ausgebildet ist.

14. Schraube nach einem der Ansprüche 1 bis 13, dadurch gekennzeichnet, daß die Länge der Gewindebereiche (11, 12) auf den einzelnen Schaftabschnitten (9, 10) jeweils gleich groß ist.

## Claims

1. A screw (1) for fastening at a distance cover plates (2) or rails, optionally with the interposition of insulating materials (3), to a substructure (4), having a shank (9,10) provided at least partly with a thread (11,12) and a head (14) provided for tool engagement, wherein at least two shank portions (9,10) are provided with threaded zones (11,12) of different diameter, and wherein the underside (13) of the head (14) of the screw (1) and a transition (15) between two shank portions (9,10) form abutments,
characterised in that a threadless zone (16,17) adjoins both the underside (13) of the head (14) and the transition (15) between two shank portions (9,10) with threaded zones (11,12) of different diameter on the respective shank portion (9,10), wherein the axial length (L1,L2) of these threadless zones (16,17) is adapted, on the one hand, to the thickness of the cover plates (2) or rails to be fastened and optionally inserted washers and/or sealing rings (18) and, on the other hand, to the thickness of the substructure (4).

2. A screw according to Claim 1, characterised in that the ends of the threaded zones (11,12) facing the head (14) of the screw (1) or the transition (15) between two shank portions (9,10) having threaded zones (11,12) of different diameter have an axial spacing (A) from one another matched to the distance (B) of the cover plates (2) or rails from the substructure (4, 7).

3. A screw according to Claim 1 or 2, characterised in that all the threaded zones (11,12) have the same pitch.

4. A screw according to any one of Claims 1 to 3, characterised in that the threaded zones (11,12) are in the form of a two-start or multistart thread.

5. A screw according to any one of Claims 1 to 4, characterised in that the diameter of the threadless zones (16,17) corresponds at least approximately to the root diameter of the respective associated threaded zone (11,12).

6. A screw according to any one of Claims 1 to 5, characterised in that the transition (15) is formed by an abutment collar (22) disposed on the next following shank portion (10) in the direction of the screw head (14).

7. A screw according to Claim 6, characterised in that the abutment collar (22) is separated from the following shank portion (10) by a groove-like indentation (23).

8. A screw according to Claims 6 and 7, characterised in that the diameter (D1) of the abutment collar (22) is greater than the outer diameter (D3) of the threaded zone (11) following in the direction of the free end of the screw.

9. A screw according to any one of Claims 6 to 8, characterised in that the diameter (D1) of the abutment collar (22) is greater than the diameter (D2) of the shank portion (10) following in the direction of the screw head (14).

10. A screw according to any one of Claims 6 to 9, characterised in that the diameter (D4) of the base of the groove-like indentation (23) is smaller than the diameter (D2) of the shank portion (10) following in the direction of the screw head.

11. A screw according to any one of Claims 6 to 9, characterised in that the diameter (D4) of the base of the groove-like indentation (23) corresponds approximately to the root diameter of the threaded portion (11) following in the direction of the free end of the screw.

12. A screw according to any one of Claims 1 to 11, characterised in that the threadless zone (17) immediately adjoining the head (14) of the screw (1) has two portions (20,21) of different diameter, wherein the portion (20) near the head is of a larger diameter matched to a washer and/or sealing ring (18) and the following portion (21) is matched substantially to the root diameter of the following threaded portion (12).

13. A screw according to any one of Claims 1 to 12, characterised in that a drilling member (19) is provided or formed at the free end of the shank.

14. A screw according to any one of Claims 1 to 13, characterised in that the length of the threaded zones (11,12) on the individual shank portions (9,10) is the same in each case.

## Revendications

1. Vis (1) pour la fixation avec intervalle de plaques de couverture (2) ou de rails, le cas échéant avec interposition d'isolants (3) sur une infrastructure (4) comprenant :
• un corps (9, 10) au moins en partie muni d'un filetage (11, 12) et une tête (14) constituant une prise pour un outil,
• au moins deux tronçons de corps (9, 10) avec des zones filetées (11, 12) ayant des diamètres différents et
• le dessous (13) de la tête (14) de la vis (1) et la transition (15) entre les deux tronçons de corps (9, 10) formant des butées,
caractérisée en ce qu'
• aussi bien au niveau du dessous (13) de la tête (14) qu'à la transition (15) entre deux tronçons de corps (9, 10) à zone filetée (11, 12) de diamètres différents, chaque tronçon (9, 10) se poursuit par une zone non filetée (16, 17),
• la longueur axiale (L1, L2) des zones non filetées (16, 17) étant définie d'une part en fonction de l'épaisseur des plaques de couverture (2) ou des rails à fixer et le cas échéant des rondelles d'appui et/ou d'étanchéité (18) utilisées et d'autre part en fonction de l'épaisseur de l'infrastructure (4).

2. Vis selon la revendication 1,
caractérisée en ce que
les extrémités des zones filetées (11, 12) tournées vers la tête (14) de la vis (1) ou de la transition (15) entre deux tronçons de corps (9, 10) à zone filetée (11, 12), de diamètres différents, sont écartées d'une distance axiale (A) adaptée à l'éloignement (B)entre la plaque de couverture (2) ou les rails et l'infrastructure (4, 7).

3. Vis selon la revendication 1 ou 2,
caractérisée en ce que
toutes les zones filetées (11, 12) ont le même pas.

4. Vis selon l'une des revendications 1 à 3,
caractérisée en ce que
les zones filetées (11, 12) ont des filetages doubles ou multiples.

5. Vis selon l'une des revendications 1 à 4,
caractérisée en ce que
le diamètre des zones non filetées (16, 17) correspond au moins approximativement au diamètre primitif de chaque zone filetée (11, 12) respective.

6. Vis selon l'une des revendications 1 à 5,
caractérisée en ce que
la transition (15) est formée par une collerette de butée (22) associée au tronçon (10) directement à la suite de la vis dans la direction de la tête (14).

7. Vis selon la revendication 6,
caractérisée en ce que
la collerette de butée (22) est séparée du tronçon (10) suivant par une gorge (23) en forme de rainure.

8. Vis selon les revendications 6 et 7,
caractérisée en ce que
le diamètre (D1) de la collerette de butée (22) est supérieur au diamètre extérieur (D3) de la zone filetée (11) suivante en direction de l'extrémité libre de la vis.

9. Vis selon l'une des revendications 6 à 8,
caractérisée en ce que
le diamètre (D1) de la collerette de butée (22) est supérieur au diamètre (D2) du tronçon de corps de vis (10) suivant en direction de la tête (14) de la vis.

10. Vis selon l'une des revendications 6 à 9,
caractérisée en ce que
le diamètre (D4) du fond de la gorge (23) en forme de rainure est inférieur au diamètre (D2) du tronçon de corps (10) suivant en direction de la tête de la vis.

11. Vis selon l'une des revendications 6 à 9,
caractérisée en ce que
le diamètre (D4) du fond de la gorge (23) en forme de rainure correspond sensiblement au diamètre primitif du segment fileté (11) qui suit en direction de l'extrémité libre de la vis.

12. Vis selon l'une des revendications 1 à 11,
caractérisée en ce que
la zone non filetée (17) directement adjacente à la tête (14) de la vis (1) présente deux segments (20, 21) de diamètres différents, le segment (20), proche de la tête, ayant un grand diamètre adapté à une rondelle d'appui et/ou d'étanchéité (18), et le segment (21) suivant étant adapté essentiellement au diamètre primitif de la zone filetée (12) suivante.

13. Vis selon l'une des revendications 1 à 12,
caractérisée en ce qu'
une partie formant foret (19) est prévue à l'extrémité libre du corps de la vis.

14. Vis selon l'une des revendications 1 à 13,
caractérisée en ce que
la longueur des zones filetées (11, 12) sur les différents tronçons (9, 10) est identique.
